# EUROPÄISCHE PATENTSCHRIFT

(11) **EP 1 326 683 B1**
(45) Veröffentlichungstag und Bekanntmachung des Hinweises auf die Patenterteilung: **10.01.2007**
(21) Anmeldenummer: 01983472.0
(22) Anmeldetag: 07.09.2001
(51) Int. Cl.: A63B 22/08

(54) **VORRICHTUNG ZUR BESTIMMUNG DER TRETKRAFT**
DEVICE FOR DETERMINING TREAD FORCE
DISPOSITIF DE DETERMINATION DE LA FORCE DE PEDALAGE

(30) Priorität: 08.09.2000 DE 10044701
(43) Veröffentlichungstag der Anmeldung: 16.07.2003
(73) Patentinhaber: Oberheim, Rainer, 64653 Lorsch (DE)
(72) Erfinder: Oberheim, Rainer, 64653 Lorsch (DE)
(74) Vertreter: Katscher, Helmut
(86) Internationale Anmeldenummer: PCT/EP2001/010368
(87) Internationale Veröffentlichungsnummer: WO 2002/020094

(56) Entgegenhaltungen:
- WO-A-99/45351
- DE-A- 3 045 851
- DE-A- 4 227 586
- US-A- 5 027 303
- US-A- 5 257 540

## Beschreibung

Die Erfindung betrifft eine Vorrichtung zur Bestimmung der auf eine Tretkurbel übertragenen Tretkraft.

Will ein Sportler seinen aktuellen Leistungsstand möglichst genau messen und auswerten, so kann er auf einem Ergometer trainieren. Die verwendeten Ergometer können dabei je nach Bedarf gezielt für eine Sportart oder an einzelne Bewegungsabläufe angepasst sein. Bei als Fahrrad-Heimtrainern gestalteten Ergometern kann beispielsweise neben der Tretfrequenz und einer simulierten Geschwindigkeit, bzw. zurückgelegten Wegstrecke auch die Tretkraft gemessen werden, mit der der Sportler die Pedale bewegt. Diese Messdaten können kontinuierlich aufgezeichnet werden und lassen genaue Aussagen über den aktuellen Leistungsstand des Leistungssportlers zu.

Obwohl der Bewegungsablauf beim Training mit einem als Fahrrad-Heimtrainer gestalteten Ergometer den Bewegungsablauf beim Radfahren entspricht, können die auf stationären Ergometern gemessenen Leistungsdaten nicht direkt auf ein frei bewegliches Fahrrad oder gar eine Wettkampfsituation im Radsport übertragen werden. So werden beispielsweise sich ständig ändernde Steigungen der gefahrenen Wegstrecke und dabei herrschende Windverhältnisse mit einem stationären Ergometer nicht erfasst, obwohl sie die Leistung eines Radsportlers merklich beeinflussen können.

Aus diesem Grund wurden bereits verschiedene Messvorrichtungen entwickelt, mit denen für die Leistung des Sportlers relevante Messwerte an frei beweglichen Fahrrädern messbar sind. Das hat den Vorteil, dass der Radsportler sein eigenes, nur geringfügig verändertes Fahrrad durchgängig für das gesamte Training verwenden kann und bei Bedarf gleichzeitig Angaben über seine Leistungsfähigkeit bekommt. Auch sind dann für den Sportler wenig abwechslungsreiche Trainingseinheiten auf stationären Ergometern nicht mehr notwendig.

Bei einer bereits bekannten Vorrichtung (siehe dokument US-A-5 257 540) der eingangs genannten Gattung wird das auf die Achse der Tretkurbelanordnung wirkende Drehmoment gemessen. In Abhängigkeit von der Kurbellänge und der ebenfalls gemessenen Trittfrequenz können dann die auf die Pedale wirkende Tretkraft sowie die Leistung berechnet werden. Dazu muss die Tretkurbelanordnung samt Achse und der Kettenblätter ausgebaut und durch eine speziell dafür vorgesehene Tretkurbelanordnung ersetzt werden. An der . Verbindungsstelle des Tretkurbel mit der Achse der Tretkurbelanordnung registrieren Dehnmessstreifen die durch die Tretkraft bewirkte Verbiegung der Tretkurbel. Die elektrischen Signale der Dehnmessstreifen werden auf einen Sensor am Fahrradrahmen übertragen.

Es werden mehrere mit einem solchen Messsystem versehene Tretkurbelanordnungen angeboten, die sich in der Länge der Tretkurbeln sowie in den verwendeten Kettenblättern unterscheiden. Da verschiedene Fahrradrahmen im Bereich der Befestigung der Tretkurbelanordnung unterschiedlich gestaltet sind, ist ein hoher Herstellungsaufwand erforderlich, um ein solches Messsystem für möglichst viele Radfabrikate anzubieten. Auch aus wirtschaftlichen Erwägungen werden deshalb nicht alle möglichen Ausführungsvarianten angeboten, so dass nicht jedes , beliebige Fahrrad mit einer derartigen Messvorrichtung ausgerüstet werden kann.

Um nun eines der mit dem Messsystem verträglichen Fahrräder umzurüsten, muss die gesamte Tretkurbelanordnung ausgewechselt werden. Dazu ist ein verhältnismäßig hoher Arbeitsaufwand erforderlich. Benutzt ein Sportler mehrere Fahrräder, so wird er es aus diesem Grund vermeiden, das an einem Fahrrad montierte Messsystem je nach Bedarf auf ein anderes, von ihm zwar momentan, aber nicht ständig genutztes Fahrrad umzurüsten.

Aufgabe der Erfindung ist es demzufolge, eine Vorrichtung zur Bestimmung der Tretkraft so auszugestalten, dass eine einfache Montage der Vorrichtung bei vielen verschiedenen Fahrradfabrikaten möglich ist. Insbesondere soll die Vorrichtung ohne eine aufwendige Veränderung oder einen vollständigen Austausch der am Fahrrad befindlichen Tretkurbelanordnung verwendet werden können.

Diese Aufgabe wird erfindungsgemäß durch die Merkmale von Anspruch 1 gelöst. Dabei ist ein Pedal federnd gelagert an der Tretkurbel angebracht und eine tangential zur Tretkurbelachse gegen die Federwirkung erfolgende Pedalbewegung messbar. Auf diese Weise wird die auf das Pedal ausgeübte Tretkraft direkt an der Krafteinleitungsstelle erfasst. Das federnd gelagerte Pedal wird dazu an einer Tretkurbel befestigt. Sobald der Sportler auf das Pedal tritt, wird dieses gegen die Federkraft ausgelenkt. Diese verhältnismäßig kleine Auslenkung wird gemessen. Bei bekannter Federkraft kann die gegen die Federwirkung erfolgte Auslenkung des Pedals in die diese Auslenkung verursachende Tretkraft umgerechnet werden.

Der Austausch der gesamten Tretkurbelanordnung ist nicht notwendig, so dass sich der zur Montage notwendige Aufwand wesentlich reduziert . Die Befestigung des federnd gelagerten Pedals an der Tretkurbel kann so gestaltet werden, dass die Vorrichtung mit nur geringen Veränderungen an die Tretkurbelsysteme fast aller Fahrradhersteller angepasst werden kann. Die Vorrichtung zur Bestimmung der Tretkraft lässt sich somit als einfaches vorjustiertes Bauteil separat herstellen und mit einfachen Mitteln, beispielsweise mit Schraubverbindungen, an das jeweilige Tretkurbelsystem befestigen. Die ganze Vorrichtung kann dementsprechend einfach von einem Fahrrad auf ein anderes umgerüstet werden.

Vorzugsweise ist vorgesehen, dass ein Gehäuse in einer für die Aufnahme des Pedals vorgesehenen Gewindebohrung der Tretkurbel befestigt ist und das Pedal beweglich im Gehäuse gelagert mit einer im Gehäuse befindlichen Feder verbunden ist. Die für die Aufnahme eines Pedals vorgesehene Gewindebohrung ist weitgehend normiert und wird von den Fahrradherstellern nahezu identisch gestaltet. Dies trifft genauso auf den zur Befestigung an der Tretkurbel vorgesehenen Gewindebolzen der meisten Pedale zu, so dass nahezu jedes Pedal an jedes beliebige Fahrrad montiert werden kann. Das Gehäuse muss demnach nur einen entsprechend der Norm gestalteten Gewindebolzen aufweisen, um nahezu an jeder Tretkurbel befestigt werden zu können. Das vorher direkt an der Tretkurbel befestigte Pedal wird stattdessen in einer Gewindebohrung verschraubt, die im Gehäuse federnd gelagert angeordnet ist. Die Montage der Vorrichtung zur Bestimmung der Tretkraft erfordert demnach kaum mehr Aufwand als das Wechseln eines Pedals. Die Gehäusebefestigung an der Gewindebohrung der Tretkurbel ermöglicht die Verwendung einer einzigen Gehäuseausführung für nahezu alle Fahrradfabrikate.

Durch das Gehäuse werden gleichzeitig der Federmechanismus sowie die beweglich gelagerte Gewindebohrung für die Befestigung des Pedals vor Schmutz und Spritzwasser geschützt. Der Federmechanismus sowie das Messsystem können fertig montiert und bereits justiert im Gehäuseinneren angeordnet sein, so dass die Vorrichtung zur Bestimmung der Tretkraft sofort nach der einfachen Montage betriebsbereit ist.

Einer Ausgestaltung des Erfindungsgedankens zufolge ist vorgesehen, dass die gegen die Federwirkung mögliche Pedalbewegung auf Bewegungen annähernd senkrecht zur Tretkurbel begrenzt ist. Das in eine Bewegung des Fahrrads umsetzbare Drehmoment wird ausschließlich durch den Anteil der Tretkraft bestimmt, der jeweils tangential auf die kreisförmig um die Tretkurbelachse rotierenden Pedale wirkt. Eine gegen die Federkraft ausschließlich in dieser Richtung bewirkte Auslenkung des beweglich gelagerten Pedals kann deshalb direkt zur Bestimmung desjenigen Anteils der Tretkraft verwendet werden, der ein in eine Bewegung des Fahrrades umsetzbares Drehmoment erzeugt. Bei Kenntnis der Federkraft in Abhängigkeit von der Auslenkung der Feder kann aus der gemessenen Pedalbewegung der jeweils tangential wirkende Anteil der Tretkraft berechnet werden. Diese Informationen ermöglichen einem Radsportler die gezielte Verbesserung der Bewegungsabläufe sowie die optimale Umsetzung der von ihm aufgebrachten Arbeit in Geschwindigkeit.

Vorteilhafterweise ist vorgesehen, dass die gegen die Federwirkung mögliche Pedalbewegung durch Endanschläge begrenzt ist. Durch solche Endanschläge werden zu große Auslenkungen des beweglich gelagerten Pedals und der damit verbundenen Feder verhindert. Eine Beschädigung der Feder infolge übermäßiger Krafteinwirkung sowie eine Dejustierung des Messsystems kann so mit einfachen Mitteln vermieden werden. Die Endanschläge können beispielsweise durch eine die Bewegung des Pedals begrenzende Öffnung im Gehäuse vorgegeben werden, durch die hindurch das Pedal beweglich gelagert im Gehäuseinneren angebracht ist.

Bevorzugt ist vorgesehen, dass das Pedal an einer Pedalbefestigung angebracht ist, die um eine im Gehäuse befestigte Achse schwenkbar gelagert ist. Ein an einer schwenkbar gelagerten Pedalbefestigung angebrachtes Pedal kann zwangsläufig nur Kreisbewegungen um die im Gehäuse befestigte Achse ausführen. Diese Kreisbewegungen des Pedals ist in einem kleinen Bereich um die gedachte Verbindungslinie von der Tretkurbelachse über die im Gehäuse befestigte Achse hinaus nahezu identisch mit einer radialen Bewegung des Pedals um die Tretkurbelachse herum. Da sich die Bestimmung der Tretkraft sinnvoller weise.auf Pedalbewegungen innerhalb eines solchen kleinen Bereichs beschränkt, kann die gemessene Pedalbewegung um die im Gehäuse befestigte Achse herum ohne nennenswerten Fehler einer gleich großen Auslenkung des Pedals um die Tretkurbelachse gleichgesetzt werden. Deshalb ist auch in diesem Fall eine Umrechnung der gemessenen Pedalbewegungen in den tangentialen Anteil der Tretkraft ohne aufwendige Korrekturen erlaubt.

Da das Pedal an der schwenkbar gelagerten Pedalbefestigung angebracht ist, sind keine aufwendigen Maßnahmen notwendig, um die Bewegungsmöglichkeit des Pedals geeignet zu begrenzen. Es genügen im wesentlichen zwei Endanschläge, die eine Schwenkbewegung der Pedalbefestigung und damit des Pedals innerhalb eines kleinen Bereichs um die Verbindungslinie der Tretkurbelachse und der im Gehäuse befestigten Achse herum. Diese Endanschläge können dadurch einfach vorgegeben werden, dass der Innenraum des Gehäuses nur eine begrenzte Schwenkbewegung der Pedalbefestigung zulässt.

Die auf das Pedal und damit auch dessen Befestigung wirkenden Tretkräfte erfordern eine hohe Stabilität aller das Pedal an der Tretkurbel befestigenden Bauteile. Dies kann im wesentlichen durch eine stabile Ausgestaltung der Pedalbefestigung sowie der im Gehäuse befestigten Achse erreicht werden. Ein weitgehend massives und damit auch schweres Gehäuse selbst ist dann nicht erforderlich. Die dementsprechend klein und leicht gestaltete Vorrichtung zur Bestimmung der Tretkraft fällt deshalb während des Radfahrens nicht störend auf.

Einer Ausgestaltung des Erfindungsgedankens zufolge ist vorgesehen, dass das Gehäuse mittels eines einstellbaren Abstandshalters so ausrichtbar ist, dass sich die Achsmittelpunkte der Tretkurbelachse, der schwenkbar gelagerten Pedalbefestigung sowie des Pedals in der Ausgangsstellung auf einer gemeinsamen Geraden befinden. Die Achse, um die sich die Pedalbefestigung dreht, ist fest im Gehäuse angeordnet. Da nur sehr geringe Auslenkungen des Pedals um diese fest vorgegebene Achse herum vorgesehen sind, kann nur durch eine Ausrichtung des ganzen Gehäuses erreicht werden, dass alle drei Achsen auf einer gemeinsamen Geraden angeordnet sind. Bei dieser Anordnung ist die Abweichung der gegen die Federkraft erfolgten Pedalbewegung von einer kreisförmigen Bewegung um die Tretkurbelachse so gering, dass keine aufwendigen Korrekturen bei der Auswertung der Messungen erforderlich sind.

Das Gehäuse ist in der Gewindebohrung der Tretkurbel befestigt, wobei zwar die Gewindebohrung normiert ist, die Tretkurbel aber verschieden gestaltet sein kann. Eine speziell an die Form einer Tretkurbel angepasste Gehäuseausführung könnte dann nicht mehr zusammen mit einer anderen Tretkurbel verwendet werden, so dass der Vorteil der normierten Gewindebohrung und damit universellen Befestigung des Gehäuses aufgehoben wäre.

Aus diesem Grund ist zwischen dem Gehäuse und der Tretkurbel ein kleiner Abstand vorgesehen, der über einen Abstandshalter eingestellt werden kann. Das Gehäuse ist somit außer an der Gewindebohrung der Tretkurbel an einem weiteren Punkt mit der Tretkurbel verstellbar verbunden. Mit dem verstellbaren Abstandshalter kann eine Ausrichtung des Gehäuses und damit der drei Achsenmittelpunkte unabhängig von der jeweiligen Form der Tretkurbel erreicht werden. Der verstellbare Abstandshalter ist ausreichend stabil ausgeführt, um eine sichere und dauerhafte Befestigung des Gehäuses samt dem beweglich gelagerten Pedal an der Tretkurbel zu gewährleisten.

Bevorzugt ist vorgesehen, dass die schwenkbar gelagerte Pedalbefestigung eine Federzunge aufweist, die einer möglichen Schwenkbewegung der Pedalbefestigung entgegenwirkt. Der Schwenkbewegung der Pedalbefestigung und damit dem daran befestigten Pedal soll eine Federkraft entgegenwirken. Dies kann herstellungstechnisch einfach dadurch erreicht werden, dass die Pedalbefestigung eine Federzunge aufweist und jede Schwenkbewegung der Pedalbefestigung zwingend eine Verformung dieser elastischen Federzunge bewirkt. Auf diese Weise sind die Pedalbefestigung und der Federmechanismus einteilig ausgeführt, so dass keine aufwendigen Verbindungselemente notwendig sind und der mindestens notwendige Platzbedarf gering ist.

Durch die einteilige Ausführung der Pedalbefestigung mit Federzunge sind zusätzliche bewegliche Bauteile im Inneren des Gehäuses überflüssig, so dass die Gefahr einer Beschädigung infolge hoher Beanspruchung während des Betriebs deutlich verringert wird. Infolge einer geeigneten Formgebung der Federzunge kann eine konstante Federkraft über den gesamten Auslenkungsbereich erreicht werden. Eine gemessene Schwenkbewegung des Pedals um die im Gehäuse befestigte Achse der Pedalbefestigung ist dann direkt proportional zum tangential gerichteten Anteil der Tretkraft.

Es ist vorgesehen, dass die Kontaktbereiche der Pedalbefestigung zum Gehäuse aus abriebfestem und schwer verformbarem Material bestehen. Bei jeder Belastung des Pedals wird die schwenkbar gelagerte Pedalbefestigung bewegt und die Federzunge entsprechend verformt. Dies stellt eine erhebliche Materialbelastung der Kontaktbereiche von Pedalbefestigung und Gehäuse dar. Um einen betriebsbedingten Verschleiß möglichst zu verhindern, ist es zweckmäßig, diese Kontaktbereiche aus möglichst.widerstandsfähigem Material herzustellen. Das Gehäuse dagegen soll möglichst leicht sein und die Federzunge aus elastischem und weitgehend ermüdungsfreien Material bestehen. Aus diesen Gründen ist es nicht sinnvoll, das ganze.Gehäuse und die Pedalbefestigung samt Federzunge aus möglichst widerstandsfähigem Material herzustellen. Das Gehäuse und die Pedalbefestigung können unabhängig voneinander aus für die jeweilige Anforderung optimal geeigneten Materialien hergestellt sein. Ein besonders widerstandsfähiges und infolgedessen meistens schweres Material wird nur an den Berührungsstellen beider Bauteile verwendet.

Einer vorteilhaften Ausgestaltung des Erfindungsgedankens zufolge ist vorgesehen, dass die Messung der Pedalbewegung gegen die Federwirkung mittels eines, Hallsensors und eines Dauermagneten erfolgt. Der Hallsensor misst dabei das an einem Punkt lokal herrschende Magnetfeld und kann dessen Änderungen sehr empfindlich registrieren. Das Magnetfeld wird von einem Dauermagneten erzeugt, dessen Magnetfeld als zeitlich konstant angenommen wird. Durch Bewegungen des Dauermagneten relativ zum Hallsensor ändert sich das Magnetfeld am Ort des Hallsensors, was von diesem nachgewiesen wird und als Maß für eine Lageveränderung des Dauermagneten relativ zum Hallsensor verwendet werden kann.

Eine derart ausgebildete Messeinrichtung arbeitet: berührungslos und deshalb auch über große Zeiträume verschleißfrei. In Verbindung mit einer hohen Sensitivität des Hallsensors ist eine große Messgenauigkeit, sowie eine zuverlässige, von Korrosion und anderen Störeinflüssen weitgehend unabhängige Aufnahme von Messwerten möglich.

Vorzugsweise ist vorgesehen, dass der Dauermagnet an der schwenkbar gelagerten Pedalbefestigung angebracht ist und der Hallsensor am Gehäuse und damit unbeweglich relativ zur Tretkurbel befestigt ist. Der Dauermagnet benötigt während des Betriebs keinerlei Verbindung zur Auswerteelektronik, so dass er beliebig auch auf beweglichen Bauteilen positioniert werden kann. Für den Betrieb des Hallsensors sind aber eine Energieversorgung und Signalleitungen erforderlich. Diese elektronische Verkabelung gestaltet sich wesentlich einfacher, wenn der Hallsensor unbeweglich im Gehäuse befestigt ist.

Mit dem Hallsensor werden lokale Änderungen des Magnetfelds des bewegten Dauermagneten am Ort des Hallsensors nachgewiesen, die aufgrund der geringen Abmessungen des Dauermagneten sowie dessen zusätzlicher Schwenkbewegung während des Betriebs nicht linear der Bewegung des Pedals entsprechen. Diese nicht-lineare Abhängigkeit des Messsignals des Hallsensors von der Lage des Dauermagneten kann jedoch durch eine daran angepasste Ansteuerung des Hallsensors oder eine dies berücksichtigende Auswerteelektronik ausgeglichen werden. An die Genauigkeit der Montage des Hallsensors sowie des Dauermagneten müssen deshalb keine hohen Anforderungen gestellt werden, da auf diese Weise auch Abweichungen von der bei der Herstellung vorgesehenen Position nachträglich ausgeglichen werden können.

Einer Ausgestaltung des Erfindungsgedankens zufolge ist vorgesehen, dass der Hallsensor und der Dauermagnet von einer magnetischen Abschirmung umgeben sind. Auf diese Weise kann die Messeinrichtung vor äußeren störenden Magnetfeldern geschützt werden. Dies ist insbesondere dann vorteilhaft, wenn die messtechnisch erfasste Bewegung des Pedals gegen die Federkraft nur klein ist und, deshalb die Sensitivität des Hallsensors sehr hoch vorgegeben werden muss, um eine ausreichende Genauigkeit der Messwerte zu ermöglichen.

Es ist vorgesehen, dass eine elektronische Auswerteeinheit im Innenraum des Gehäuses angeordnet ist.

Um die für eine Ansteuerung des Hallsensors sowie für eine Auswertung der Messsignale notwendige Elektronik vor Schmutz und Feuchtigkeit zu schützen, ist die Anordnung aller elektronischen Bauteile im Gehäuseinneren vorteilhaft. Die üblicherweise kleinen elektronischen Komponenten können beispielsweise auf einer gemeinsamen Leiterplatte angeordnet werden, die im Innern des Gehäuses befestigt ist.

Vorteilhafterweise ist vorgesehen, dass die Messwerte telemetrisch zu einer Auswertestation übertragbar sind. Die Vorrichtung zur Bestimmung der Tretkraft ist üblicherweise am äußeren Ende der Tretkurbel montiert. Jedes zusätzliche Gewicht wird aber gerade an dieser Stelle als störend empfunden, so dass die dort angebrachte Vorrichtung zur Bestimmung der Tretkraft möglichst leicht und klein gestaltet sein sollte. Aus diesem Grund werden alle nicht unbedingt zur Bestimmung der Tretkraft notwendigen Komponenten außerhalb, beispielsweise am Rahmen oder unter dem Sattel des Fahrrads angeordnet. Der direkt am Pedal gemessene Signalwert wird dann telemetrisch zu der Auswertestation übertragen und dort ausgewertet und eventuell über ein Display angezeigt.

Bevorzugt ist vorgesehen, dass je ein Pedal federnd gelagert an den beiden Tretkurbeln der Tretkurbelanordnung angebracht ist und die gegen die Federwirkung erfolgenden Pedalbewegungen unabhängig messbar sind. Bei Verwendung einer Vorrichtung zur Bestimmung der Tretkraft wird das Pedal nicht direkt in der Gewindebohrung der Tretkurbel angebracht, sondern leicht versetzt in der dafür vorgesehenen Gewindebohrung der Vorrichtung zur Bestimmung der Tretkraft montiert. Die durch eine einseitige Verwendung der Vorrichtung verursachte leicht unsymmetrische Pedalstellung kann während des Betriebs unangenehm wahrgenommen werden. Wird jedoch an beiden Tretkurbeln je eine Vorrichtung zur Bestimmung der Tretkraft montiert, so ist kein Unterschied zu einer normalen Pedalbefestigung an den Tretkurbeln feststellbar. Zudem sind die auf jeder Seite wirkenden Tretkräfte unabhängig voneinander messbar und auch auswertbar. Auf diese Weise können ungleichmäßige Bewegungsabläufe oder eine unvorteilhaft einseitige Belastung erkannt und gezielt verbessert werden.

Weitere Ausgestaltungen des Erfindungsgedankens sind Gegenstand weiterer Unteransprüche.

Nachfolgend werden Ausführungsbeispiele der Erfindung näher erläutert, die in der Zeichnung dargestellt sind.

Es zeigt:
Fig. 1 einen Schnitt durch eine an einer Tretkurbel montierte Vorrichtung zur Bestimmung der Tretkraft,
Fig. 2 einen Ausschnitt der Fig. 1 mit der Position eines Hallsensors relativ zu einem Dauermagneten in der Ausgangsstellung,
Fig. 3 den in Fig. 2 gezeigten Ausschnitt bei maximaler Auslenkung des Dauermagneten,
Fig. 4 einen Schnitt durch eine Vorrichtung zur Bestimmung der Tretkraft mit einer Druckfeder,
Fig. 5 einen Schnitt durch eine Vorrichtung zur Bestimmung der Tretkraft mit einer Verdrehfeder,
Fig. 6 einen Schnitt durch eine Vorrichtung zur Bestimmung der Tretkraft mit einer im Kontaktbereich verstärkten Federzunge,
Fig. 7 eine Seitenansicht der in Fig. 1 gezeigten Vorrichtung zur Bestimmung der Tretkraft vor der Befestigung an einer Tretkurbel,
Fig. 8 eine Seitenansicht der in Fig. 7 gezeigten Vorrichtung zur Bestimmung der Tretkraft mit schematisch angedeuteter schwenkbar gelagerten Pedalbefestigung,
Fig. 9 die an der Tretkurbel montierte Vorrichtung zur Bestimmung der Tretkraft mit einem daran befestigten Pedal,
Fig. 10 einen Schnitt entlang der Linie X-X in Fig. 9 und
Fig. 11 eine Seitenansicht einer Tretkurbelanordnung mit Kettenblatt, an der an beiden Tretkurbeln je eine Vorrichtung zur Bestimmung der Tretkraft samt daran befestigtem Pedal angebracht ist.

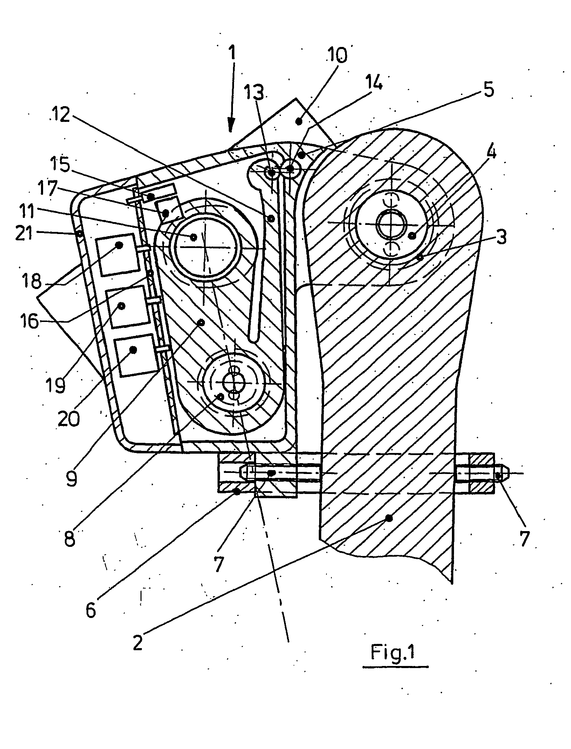

Fig. 1 zeigt einen Schnitt durch eine Vorrichtung 1 zur Bestimmung der Tretkraft, die an einer Tretkurbel 2 befestigt ist. Die Tretkurbel 2 weist eine normierte, von allen Herstellern weitgehend identisch ausgestaltete Gewindebohrung 3 auf. Die Vorrichtung 1 zur Bestimmung der Tretkraft ist über einen an die Gewindebohrung 3 angepassten Gewindebolzen 4 mit der Tretkurbel 2 verbunden. Die Vorrichtung 1 zur Bestimmung der Tretkraft weist ein Gehäuse 5 auf, in dem die für die Messung der Tretkraft notwendigen Bauteile vor Schmutz und Feuchtigkeit geschützt untergebracht sind. Das Gehäuse 5 ist an der der nicht dargestellten Tretkurbelachse zugewandten Seite über einen einstellbaren Abstandshalter 6 ebenfalls mit der Tretkurbel 2 verbunden. Der einstellbare Abstandshalter 6 weist zwei Gewindestifte 7 auf, die von beiden Seiten fest an die Tretkurbel 2 geschraubt werden können. Die für die Aufnahme der Tretkurbel 2 vorgesehene Aussparung des einstellbaren Abstandshalters 6 ist ausreichend groß, um auch breitere oder dickere Tretkurbeln als die in der Fig. 1 dargestellten Tretkurbel 2 aufnehmen zu können.

In dem Gehäuse 5 befindet sich eine an einer Achse 8 schwenkbar gelagerte Pedalbefestigung 9. An dem der Achse 8 gegenüber liegenden Ende der Pedalbefestigung 9 befindet sich eine für die Aufnahme eines Pedals 10 vorgesehene, den entsprechenden Normen angepasste Gewindebohrung 11. Durch eine nicht sichtbare Öffnung des Gehäuses 5 hindurch ist das Pedal 10 mit der Gewindebohrung 11 der Pedalbefestigung 9 verschraubt.

Die schwenkbar gelagerte Pedalbefestigung 9 weist eine im wesentlichen parallel zur Tretkurbel 2 ausgerichtete Federzunge 12 auf. Diese Federzunge 12 wirkt in einer Richtung einer Drehung der Pedalbefestigung 9 um die Achse 8 entgegen. Die auf das Pedal 10 und die damit fest verbundene Pedalbefestigung 9 wirkendenTretkräfte verursachen eine geringe Schwenkbewegung der Pedalbefestigung 9 um die Achse 8 herum, bis der für die Schwenkbewegung verantwortliche Anteil der Tretkraft der entgegenwirkenden Federkraft der Federzunge 12 entspricht. Bei bekannter Federkraft der Federzunge 12 und gemessener Auslenkung der Pedalbefestigung 9 ist auf diese Weise eine Bestimmung des tangential auf die Tretkurbel wirkenden Anteils der Tretkraft möglich.

Während des Radfahrens verändert sich die auf das Pedal 10 bewirkte Tretkraft ständig, wodurch eine kontinuierliche, aber ungleichmäßige Schwenkbewegung der Pedalbefestigung 9 und demzufolge eine ständige Verformung und Bewegung der Federzunge 12 verursacht wird. Im Kontaktbereich der Federzunge 12 mit dem Gehäuse 5 treten hohe Belastungen auf, die zu einem die Funktion der Vorrichtung zur Bestimmung der Tretkraft beeinträchtigenden Materialverschleiß führen können. Aus diesem Grund ist ein gehärteter Bolzen 13 leicht vorspringend am Ende der Federzunge 12 angebracht. In gleicher Weise ist auch am Gehäuse leicht vorspringend ein gehärteter Bolzen 14 angebracht, so dass die beiden gehärteten Bolzen 13 und 14 den einzigen Berührungspunkt der Federzunge 12 mit dem Gehäuse 5 bilden. Die gehärteten Bolzen 13 und 14 sind ausreichend stabil und widerstandsfähig, um auch hohe Belastungen auf lange Sicht auszuhalten und eine die Funktion der Vorrichtung 1 zur Bestimmung der Tretkraft beeinträchtigende Materialabnutzung zu vermeiden.

Eine Schwenkbewegung der Pedalbefestigung 9 um die Achse 8 wird mittels eine Hallsensors 15 gemessen. Dieser ist auf einer fest im Gehäuse angebrachten Leiterplatte 16 befestigt. Auf der dem Hallsensor 15 zugewandten Seite der Pedalbefestigung 9 ist in kurzem Abstand zum Hallsensor. 15 ein Dauermagnet 17 angebracht. Bei einer Schwenkbewegung der Pedalbefestigung 9 wird der daran befestigte Dauermagnet 17 relativ zum Hallsensor 15 verschoben. Dadurch verändert sich das vom Dauermagneten 17 erzeugte Magnetfeld im Bereich des Hallsensors 15. Diese Veränderung des Magnetfelds im Bereich des Hallsensors 15 wird nachgewiesen und zur Bestimmung der Schwenkbewegung der Pedalbefestigung 9 und damit auch der tangential auf die Tretkurbel wirkenden Tretkräfte verwendet. Die einstellbare Sensitivität des Hallsensors 15 ist zweckmäßigerweise an die maximal nachweisbare Auslenkung des Dauermagneten 17 angepasst.

Auf der im Gehäuse 5 befestigten Leiterplatte 16 sind weitere elektronische Baugruppen angeordnet. Die Messsignale des Hallsensors 15 werden von einem Analog-Digital-Wandler 18 umgewandelt und von einer Sendeeinrichtung 19 zu einer nicht in der Fig. 1 dargestellten Auswerteeinheit telemetrisch übertragen. Auf der Leiterplatte 16 ist auch eine Batterie 20 zur Energieversorgung der elektrischen Bauteile sowie des Hallsensors 15 angeordnet. Ein abnehmbarer Gehäusedeckel 21 erlaubt einen einfachen Wechsel der Batterie 20 und schützt die elektronischen Komponenten während des Betriebs vor Schmutz und Feuchtigkeit.

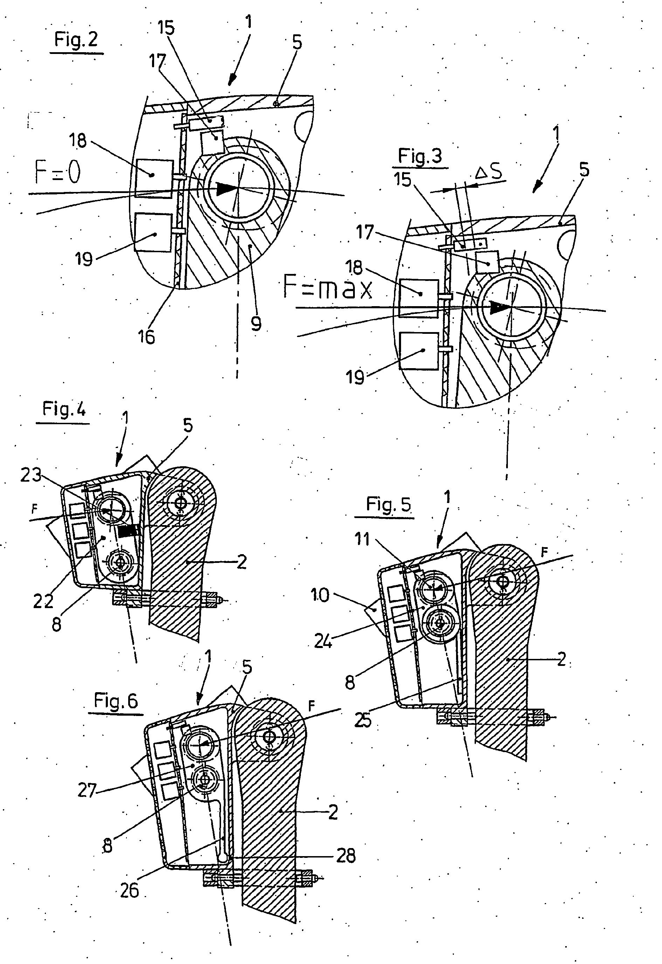

In den Fig. 2 und 3 ist ein Detailbereich der Vorrichtung 1 zur Bestimmung der Tretkraft um den Hallsensor 15 herum gezeigt. Fig. 2 zeigt den Ausgangszustand der Pedalbefestigung 9 ohne äußerliche Krafteinwirkung. In dieser Stellung der Pedalbefestigung 9 befindet sich der daran befestigte Dauermagnet 17 in kurzem Abstand direkt gegenüber dem Hallsensor 15.

Fig. 3 zeigt denselben Ausschnitt der Vorrichtung 1 zur Bestimmung der Tretkraft, wobei die Pedalbefestigung 9 infolge einer auf das nicht gezeigte Pedal wirkenden Tretkraft maximal verdreht ist. Dies entspricht einer als ΔS bezeichneten Auslenkung des Dauermagneten 17 relativ zu seiner Ruhestellung. Jede Verschiebung des Dauermagneten 17 zwischen seiner Ausgangsposition und der in der Fig. 3 gezeigten maximalen Auslenkung wird von dem Hallsensör 15 nachgewiesen und kann zur Bestimmung der Tretkraft verwendet werden.

In den Fig. 4, 5 und 6 sind verschiedene Ausführungsformen der Pedalbefestigung sowie des damit verbundenen Federmechanismus gezeigt. Die in Fig. 4 dargestellte Vorrichtung 1 zur Bestimmung der Tretkraft weist eine einfach ausgeführte Pedalbefestigung 22 auf. Diese um die Achse 8 schwenkbar gelagerte Pedalbefestigung 22 ist über eine Druckfeder 23 mit dem Gehäuse 5 verbunden. Es ist ebenso möglich, dass eine schwenkbar gelagerte Pedalbefestigung statt, wie in Fig. 4 gezeigt, über eine Druckfeder 23 statt dessen über eine Zugfeder mit dem Gehäuse 5 verbunden ist.

Die in Fig. 5 gezeigte Pedalbefestigung 24 weist eine Verdrehfeder mit einer abstehenden Federzunge 25 auf, deren Windungen die Achse 8 umgeben und deren Federzunge 25 an der Wand des Gehäuses 5 anliegt. In dieser Anordnung wirkt die Federkraft der Verdrehfeder einer entgegengesetzten Drehbewegung der Pedalbefestigung 24 entgegen.

Bei der in Fig. 6 gezeigten Ausführungsform der Vorrichtung 1 zur Bestimmung der Tretkraft ist die Federzunge 26 der Pedalbefestigung 27 auf der der Gewindebohrung 11 gegenüberliegenden Seite jenseits der Achse 8 an der-Pedalbefestigung 27 angeordnet. Auf diese Weise kann bei ansonsten baugleicher Ausführung eine entgegengesetzt angreifende Tretkraft erfasst werden. Im Bereich der Kontaktfläche der Federzunge 26 mit dem Gehäuse 5 ist eine gehärteter Bolzen 28 so angeordnet, dass die Federzunge 26 nur diesen gehärteten Bolzen 28, nicht aber das Gehäuse 5 selbst berührt.

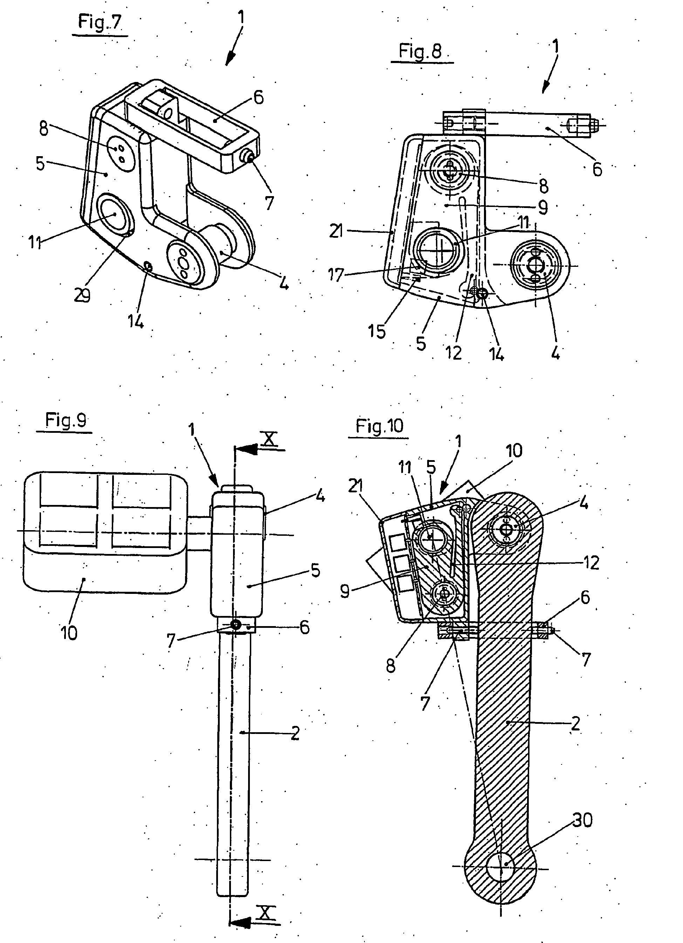

Die in Fig. 1 angeschnitten dargestellte Vorrichtung 1 zur Bestimmung der Tretkraft ist in Fig. 7 in einer Seitenansicht gezeigt. Der Gewindebolzen 4 sowie der einstellbare Abstandshalter 6 mit dem Gewindestift 7 ist für die Befestigung der Vorrichtung 1 zur Bestimmung der Tretkurbel an einer Tretkurbel vorgesehen. Das mit abgerundeten Kanten versehene Gehäuse 5 weist eine im wesentlichen elliptische Öffnung 29 auf. In diese elliptische Öffnung 29 ragt die bündig mit der Außenseite des Gehäuses 5 abschließende für die Aufnahme des Pedals vorgesehene Gewindebohrung 11. Die Schwenkbewegung der nicht sichtbaren Pedalbefestigung 9 um die Achse 8 herum wird durch den Eingriff der etwas vorspringenden Gewindebohrung 11 in die im wesentlich elliptische Öffnung 29 begrenzt.

Bei der in Fig. 8 dargestellten Seitenansicht der in Fig. 7 gezeigten Vorrichtung 1 zur Bestimmung der Tretkraft ist gestrichelt die Lage der wesentlichen Komponenten angedeutet. Der an der Pedalbefestigung 9 angebrachte Dauermagnet 17 befindet sich ohne äußere Krafteinwirkung in seiner Ausgangsstellung gegenüber dem Hallsensor 15.

In Fig. 9 ist eine Seitenansicht der an der Tretkurbel 2 montierten Vorrichtung 1 zur Bestimmung der Tretkraft dargestellt. Das Gehäuse 5 ist dabei über den Gewindebolzen 4 sowie den einstellbaren Abstandshalter 6 und dem Gewindestift 7 mit der Tretkurbel 2 verbunden.

Fig. 10 zeigt einen Schnitt entlang der Linie X-X in Fig. 9. Die Vorrichtung 1 zur Bestimmung der Tretkraft ist dabei über den Gewindebolzen 4 fest mit der Tretkurbel 2 verbunden. Die Orientierung der Vorrichtung 1 zur Bestimmung der Tretkraft relativ zur Tretkurbel 2 kann über die beiden Gewindestifte 7 des einstellbaren Abstandshalters 6 verändert werden. Insbesondere kann die Vorrichtung 1 zur Bestimmung der Tretkraft über den einstellbaren Abstandshalter 6 so positioniert werden, dass die Mittelpunkte der Gewindebohrung 11, der Achse 8 und der Tretkurbelachse 30 auf einer Geraden liegen. In diesem Fall kann der über eine Auslenkung der Pedalbefestigung 9 entgegen der Federkraft nachgewiesene Anteil der Tretkraft in guter Näherung dem tangential auf die Tretkurbel wirkenden Anteil der Tretkraft gleichgesetzt werden..Dadurch vereinfacht sich die Auswertung der mit dem Hallsensor 15 gemessenen Signale deutlich.

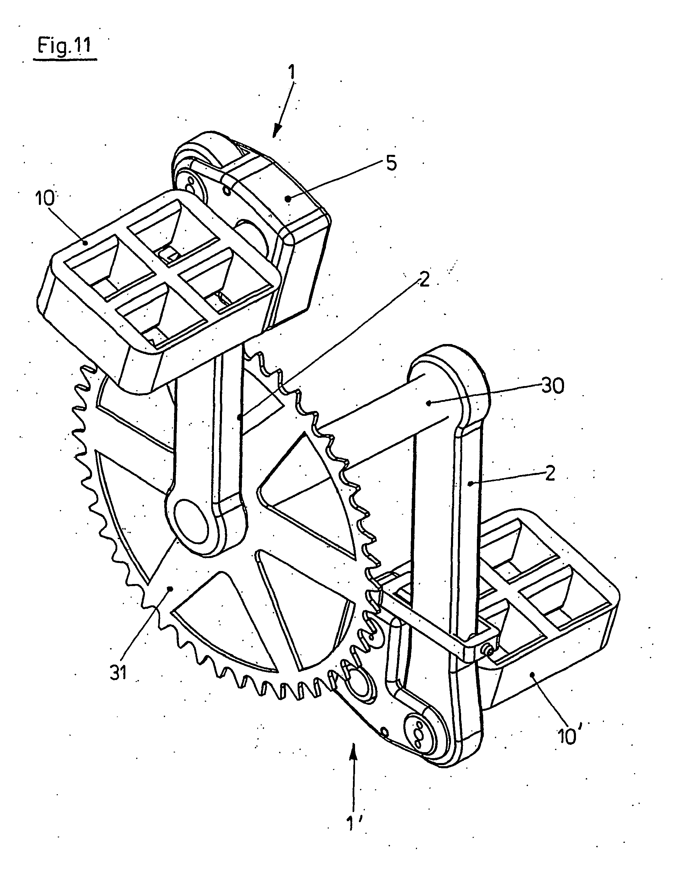

Fig. 11 zeigt eine Seitenansicht einer vollständigen Tretkurbelanordnung mit einem Kettenblatt 31, bei der an beiden Seiten der Tretkurbelachse 30 an den Tretkurbeln 2, 2' je eine Vorrichtung 1, 1' zur Bestimmung der Tretkraft und daran ein Pedal 10, 10' befestigt ist.

## Patentansprüche

1. Vorrichtung zur Bestimmung der auf eine Tretkurbel übertragenen Tretkraft, mit einer Feder und einer Einrichtung zur Messung einer tangential zu einer Tretkurbelachse gegen die Feder erfolgenden Bewegung eines Pedals, wobei die Vorrichtung mit der Tretkurbel und das Pedal mit der Feder verbindbar sind, so dass das Pedal tangential zur Tretkurbelachse bewegbar ist.

2. Vorrichtung nach Anspruch 1, **gekennzeichnet durch** ein Gehäuse (5), das in einer für die Aufnahme des Pedals (10, 10') vorgesehenen Gewindebohrung (3) der Tretkurbel (2, 2') befestigbar ist, wobei das Pedal (10, 10') beweglich am Gehäuse (5, 5') lagerbar und mit der im Gehäuse (5, 5') befindlichen Feder verbindbar ist.

3. Vorrichtung nach Anspruch 1, **dadurch gekennzeichnet, dass** die gegen die Federwirkung mögliche Pedalbewegung auf Bewegungen annähernd senkrecht zur Tretkurbel (2, 2') begrenzt ist.

4. Vorrichtung nach Anspruch 1, **dadurch gekennzeichnet, dass** die gegen die Federwirkung mögliche Pedalbewegung durch Endanschläge begrenzt ist.

5. Vorrichtung nach Anspruch 1, **dadurch gekennzeichnet, dass** das Pedal (10, 10') an einer Pedalbefestigung (9, 22, 24, 27) angebracht ist, die um eine im Gehäuse (5, 5') befestigte Achse (8) schwenkbar gelagert ist.

6. Vorrichtung nach Anspruch 5, **dadurch gekennzeichnet, dass** das Gehäuse (5, 5') mittels eines einstellbaren Abstandshalters (6) so ausrichtbar ist, dass sich die Mittelpunkte der Tretkurbelachse (30), der Achse (8) der schwenkbar gelagerten Pedalbefestigung (9, 22, 24, 27) sowie der für die Aufnahme des Pedals (10, 10') vorgesehenen Gewindebohrung (11) auf einer gemeinsamen Geraden befinden.

7. Vorrichtung nach Anspruch 5, **dadurch gekennzeichnet, dass** die schwenkbar gelagerte Pedalbefestigung (9, 22, 24, 27) eine Federzunge (12, 25, 26) aufweist, die einer möglichen Schwenkbewegung der Pedalbefestigung (9, 22, 24, 27) entgegenwirkt.

8. Vorrichtung nach Anspruch 1, **dadurch gekennzeichnet, dass** die Messung der Pedalbewegung gegen die Federwirkung mittels eines Hallsensors (15) und eines Dauermagneten (17) erfolgt.

9. Vorrichtung nach Anspruch 5 und 8, **dadurch gekennzeichnet, dass** der Dauermagnet (17) an der schwenkbar gelagerten Pedalbefestigung (9, 22, 24, 27) angebracht ist und der Hallsensor (15) im Gehäuse (5, 5') unbeweglich relativ zur Tretkurbel befestigt ist.

10. Vorrichtung nach Anspruch 1, **dadurch gekennzeichnet, dass** je ein Pedal (10, 10') federnd gelagert an den beiden Tretkurbeln (2, 2') der Tretkurbelanordnung angebracht ist und die jeweils gegen die Federwirkung erfolgende Pedalbewegung unabhängig voneinander messbar ist.

## Claims

1. Device for determining the tread force transmitted to a pedal crank, with a spring and a device for measuring a movement of a pedal taking place tangentially to a pedal-crank spindle counter to the spring, the device being connectable to the pedal crank and the pedal being connectable to the spring, so that the pedal is movable tangentially to the pedal-crank spindle.

2. Device according to Claim 1, **characterized by** a housing (5) which is fastenable in a threaded hole (3), provided for receiving the pedal (10, 10'), of the pedal crank (2, 2'), the pedal (10, 10') being mountable movably on the housing (5, 5') and being connectable to the spring situated in the housing (5, 5') .

3. Device according to Claim 1, **characterized in that** the pedal movement which is possible counter to the action of the spring is limited to movements approximately perpendicularly to the pedal crank (2, 2').

4. Device according to Claim 1, **characterized in that** the pedal movement which is possible counter to the action of the spring is limited by end stops.

5. Device according to Claim 1, **characterized in that** the pedal (10, 10') is fitted on a pedal-fastening means (9, 22, 24, 27) which is mounted pivotably about a spindle (8) fastened in the housing (5, 5').

6. Device according to Claim 5, **characterized in that** the housing (5, 5') is alignable by means of an adjustable spacer (6) in such a manner that the centre points of the pedal-crank spindle (30), of the spindle (8) of the pivotably mounted pedal-fastening means (9, 22, 24, 27) and of the threaded hole (11) provided for receiving the pedal (10, 10') are situated on a common straight line.

7. Device according to Claim 5, **characterized in that** the pivotably mounted pedal-fastening means (9, 22, 24, 27) has a spring tongue (12, 25, 26) which opposes a possible pivoting movement of the pedal-fastening means (9, 22, 24, 27).

8. Device according to Claim 1, **characterized in that** the measuring of the pedal movement counter to the action of the spring takes place by means of a Hall sensor (15) and a permanent magnet (17).

9. Device according to Claims 5 and 8, **characterized in that** the permanent magnet (17) is fitted on the pivotably mounted pedal-fastening means (9, 22, 24, 27) and the Hall sensor (15) is fastened in the housing (5, 5') in an immovable manner relative to the pedal crank.

10. Device according to Claim 1, **characterized in that** a pedal (10, 10') is fitted in a resiliently mounted manner on each of the two pedal cranks (2, 2') of the pedal-crank arrangement and the respective pedal movement taking place counter to the action of the spring can be measured independently of the other.

## Revendications

1. Dispositif pour déterminer une force de pédalage transmise à une manivelle de pédalier, comprenant un ressort et un dispositif de mesure du mouvement d'une pédale accompli tangentiellement par rapport à un axe de manivelle de pédalier, le dispositif pouvant être relié avec la manivelle de pédalier et la pédale avec le ressort.

2. Dispositif selon la revendication 1, **caractérisé par** un boîtier (5) qui peut être fixé dans un trou taraudé (3) de la manivelle de pédalier (2, 2') prévu pour recevoir la pédale (10, 10'), la pédale (10, 10') pouvant être montée de manière mobile sur le boîtier (5, 5') et pouvant être reliée avec le ressort qui se trouve dans le boîtier (5, 5').

3. Dispositif selon la revendication 1, **caractérisé en ce que** le mouvement de pédale possible contre l'effet du ressort est limité aux mouvements approximativement perpendiculaires à la manivelle de pédalier (2, 2').

4. Dispositif selon la revendication 1, **caractérisé en ce que** le mouvement de pédale possible contre l'effet du ressort est limité par des butées finales.

5. Dispositif selon la revendication 1, **caractérisé en ce que** la pédale (10, 10') est montée sur une fixation de pédale (9, 22, 24, 27) qui est logée de manière à pouvoir pivoter autour d'un axe (8) fixé dans le boîtier (5, 5').

6. Dispositif selon la revendication 5, **caractérisé en ce que** le boîtier (5, 5')peut être aligné au moyen d'une entretoise (6) réglable de telle sorte que les points centraux de l'axe de la manivelle de pédalier (30), de l'axe (8) de la fixation de pédale (9, 22, 24, 27) logée de manière à pouvoir pivoter et du trou taraudé (11) prévu pour recevoir la pédale (10, 10') se trouvent sur une droite commune.

7. Dispositif selon la revendication 5, **caractérisé en ce que** la fixation de pédale (9, 22, 24, 27) logée de manière à pouvoir pivoter présente une languette élastique (12, 25, 26) qui agit en sens contraire d'un mouvement de pivotement possible de la fixation de pédale (9, 22, 24, 27).

8. Dispositif selon la revendication 1, **caractérisé en ce que** la mesure du mouvement de pédale contre l'effet du ressort s'effectue au moyen d'un capteur à effet Hall (15) et d'un aimant permanent (17).

9. Dispositif selon les revendications 5 et 8, **caractérisé en ce que** l'aimant permanent (17) est monté sur la fixation de pédale (9, 22, 24, 27) logée de manière à pouvoir pivoter et le capteur à effet Hall (15) est fixé dans le boîtier (5, 5') de manière à ne pas pouvoir bouger par rapport à la manivelle de pédalier.

10. Dispositif selon la revendication 1, **caractérisé en ce qu'**une pédale (10, 10') est à chaque fois montée sur les deux manivelles de pédalier (2, 2') de l'arrangement de manivelle de pédalier en étant logée avec effet de ressort et le mouvement de la pédale qui est à chaque effectué contre l'effet du ressort peut être mesuré indépendamment de l'autre.
